# FASCICULE DE BREVET EUROPEEN

(11) **EP 1 538 363 B1**
(45) Date de publication et mention de la délivrance du brevet: **30.05.2012**
(21) Numéro de dépôt: 03292990.3
(22) Date de dépôt: 01.12.2003
(51) Int. Cl.: F16D 65/18, F16D 65/14, B60T 7/12, B60T 8/32, B60T 8/34, B60T 8/48

(54) **Frein hydraulique de parking et procédé d'utilisation dudit frein sur une pente**
Hydraulische Feststellbremse und Verfahren zu deren Verwendung in einer Neigung
Hydraulic parking brake and method of using said brake on a slope

(43) Date de publication de la demande: 08.06.2005
(73) Titulaire: BWI Company Limited S.A., 1628 Luxembourg (LU)
(72) Inventeur: Delayre, Xavier, 75012 Paris (FR); Loche, Jacques, 92600 Asnières (FR)
(74) Mandataire: Laget, Jean-Loup

(56) Documents cités:
- US-A- 5 127 495
- US-A- 5 161 650
- US-A- 5 954 162
- US-B1- 6 315 372

## Description

La présente invention se rapporte à un frein hydraulique pour freiner une pièce tournante et à des utilisations de ce frein hydraulique dans un véhicule automobile.

On connaît, par exemple d'après FR-A-1125875, un frein hydraulique du type comportant un corps dans lequel est formée au moins une chambre reliée à une ligne hydraulique pour recevoir une pression de commande et un piston apte à se déplacer dans ladite chambre entre une position de repos et une position de freinage en réponse à ladite pression de commande, ledit frein hydraulique comportant un dispositif de blocage du piston actionnable entre une position passive dans laquelle ledit dispositif de blocage du piston laisse ledit piston se déplacer en réponse à ladite pression de commande, et une position active dans laquelle ledit dispositif de blocage du piston bloque ledit piston dans ladite position de freinage après cessation de ladite pression de commande.

Ici, le dispositif de blocage comporte une barre de commande formant coin qui se bloque en position active par autoserrage contre un doigt faisant saillie hors du piston. Grâce au dispositif de blocage du piston, un tel frein peut servir de frein de parcage pour bloquer une machine en position de repos sur une longue durée.

Le document US 5 954 162 A montre un frein hydraulique d'après le préambule de la revendication 1.

La présente invention a pour but de fournir un frein hydraulique facilitant la mise en oeuvre d'un frein de stationnement automatique dans un véhicule automobile. La présente invention a aussi pour but de faciliter la mise en oeuvre d'une fonction de maintien sur pente dans un véhicule automobile.

Pour cela, l'invention fournit un frein hydraulique du type susmentionné, caractérisé par le fait qu'il comporte un actionneur hydraulique relié à ladite ligne hydraulique par l'intermédiaire d'une vanne apte à être sélectivement ouverte ou fermée pour transmettre ou non ladite pression de commande audit actionneur hydraulique, ledit actionneur hydraulique étant apte à actionner ledit dispositif de blocage du piston jusqu'à ladite position active en réponse à ladite pression de commande.

Ainsi, ce frein hydraulique permet d'actionner le dispositif de blocage du piston, et donc de mettre en service le frein de stationnement, de manière automatique et en utilisant la pression hydraulique qui commande normalement le frein hydraulique comme source de puissance. Ainsi, il est inutile de coupler le dispositif de blocage du piston à un autre moyen de commande tel qu'un levier de frein de stationnement manuel ou un moteur électrique. Etant donné qu'une ligne hydraulique est de toute manière nécessaire pour le fonctionnement normal du frein hydraulique, le frein hydraulique selon l'invention peut être réalisé assez simplement en modifiant un frein hydraulique connu intégrant un dispositif de blocage. Il suffit pour cela d'ajouter un actionneur hydraulique et de relier celui-ci à la ligne hydraulique de commande du frein par l'intermédiaire d'une vanne commandée. Le frein hydraulique selon l'invention peut donc être réalisé à partir de tout étrier de frein hydraulique à frein de stationnement mécanique intégré.

Les revendications 2 à 4 décrirent des modes de réalisation particuliers de l'invention.

Le dispositif de bocage du piston peut fonctionner par autoserrage comme dans le frein connu précité. Avantageusement, le frein hydraulique selon l'invention comporte un verrou apte à verrouiller le dispositif de blocage du piston dans la position active. Un tel verrou présente l'avantage d'une plus grande sécurité de fonctionnement qu'un autoserrage.

De préférence, ledit verrou occupe, par défaut, un état de libération permettant l'actionnement du dispositif de blocage du piston entre lesdites positions passive et active, ledit verrou étant actionnable sélectivement depuis ladite position de libération jusqu'à un état de verrouillage pour verrouiller en position ledit dispositif de blocage du piston. Ainsi, une défaillance du verrou ne risque pas d'entraîner l'impossibilité de desserrer le frein.

Le verrou peut revêtir toute forme appropriée. Selon une réalisation particulière, le verrou comporte une crémaillère guidée en coulissement longitudinal sur un élément de support solidaire dudit corps de frein hydraulique et un levier d'arrêt monté à pivotement par rapport audit élément de support, ledit levier d'arrêt étant apte à arrêter ladite crémaillère dans l'état de verrouillage dudit verrou et à laisser ladite crémaillère se déplacer dans l'état de libération dudit verrou. L'avantage d'un tel verrou est que la crémaillère et le levier d'arrêt s'encliquètent et restent alors dans l'état de verrouillage sans qu'une action continue ne soit nécessaire.

Avantageusement, ledit verrou comporte un électroaimant apte à faire pivoter ledit levier d'arrêt à l'encontre d'un ressort de rappel.

De préférence, la vanne est une électrovanne qui présente une position fermée par défaut. Ainsi, la consommation d'énergie de la vanne est très petite, étant donné que le frein hydraulique sert le plus souvent de frein de service et que la vanne reste alors fermée sans qu'aucune action ne soit nécessaire.

Avantageusement, ladite vanne présente une position fermée dans laquelle elle permet un écoulement unidirectionnel de fluide depuis ledit actionneur hydraulique vers ladite ligne hydraulique. Ainsi, lorsque la pression de commande cesse dans la ligne hydraulique, le fluide peut refluer sans qu'il ne soit nécessaire de rouvrir la vanne.

Selon un mode de réalisation particulier de l'invention, le frein hydraulique comporte un boîtier de dérivation interposé entre la ligne hydraulique et le corps de frein hydraulique, le boîtier de dérivation comportant une entrée hydraulique reliée à la ligne hydraulique, deux branches de circuit en dérivation l'une par rapport à l'autre pour relier ladite entrée hydraulique à respectivement deux sorties hydrauliques dudit boîtier et ladite vanne pour contrôler l'écoulement dans une première desdites branches de circuit, le frein hydraulique comportant en outre deux liaisons hydrauliques reliant respectivement la sortie de la première branche audit actionneur hydraulique et la sortie de l'autre branche à ladite chambre. Ce mode de réalisation permet notamment la mise en oeuvre de l'invention en modifiant au minimum un étrier de frein hydraulique à frein de stationnement intégré. Le boîtier de dérivation peut être séparé du corps de frein hydraulique et placé à tout emplacement approprié sur le trajet de la ligne de commande hydraulique, entre le distributeur de pression et le corps de frein.

Selon un autre mode de réalisation particulier de l'invention, ledit corps de frein hydraulique comporte une liaison hydraulique reliant ladite chambre audit actionneur hydraulique et ladite vanne agencée pour contrôler l'écoulement dans ladite liaison hydraulique. Ce mode de réalisation présente une compacité avantageuse.

L'invention propose aussi une utilisation du frein hydraulique précité comme frein de stationnement d'un véhicule automobile, caractérisée par les étapes consistant à :
produire un signal de commande de frein de stationnement,
envoyer une pression de commande dans ladite ligne hydraulique en réponse audit signal de commande de frein de stationnement pour déplacer ledit piston jusqu'à ladite position de freinage,
ouvrir ladite vanne pour actionner ledit dispositif de blocage du piston jusqu'à ladite position active à l'aide dudit actionneur hydraulique,
faire cesser ladite pression de commande dans ladite ligne hydraulique pendant que ledit piston reste bloqué dans ladite position de freinage par ledit dispositif de blocage du piston dans la position active.

Dans une telle utilisation, étant donné que la manoeuvre du dispositif de blocage par l'actionneur hydraulique a lieu pendant que le piston est maintenu en position de freinage par la pression de commande, l'actionneur hydraulique agit à l'encontre d'un effort relativement faible, par exemple la force d'un ressort de rappel du dispositif de blocage. L'actionneur hydraulique peut donc être conçu de petite taille et consommer une faible quantité de fluide. Une telle utilisation n'exclut pas de prévoir également un levier de frein de stationnement manuel couplé au dispositif de blocage par un câblage classique.

L'invention propose aussi une utilisation du frein hydraulique précité pour maintenir automatiquement un véhicule automobile sur une pente, caractérisée par les étapes consistant à :
détecter un état d'arrêt dudit véhicule automobile sur une pente,
envoyer une pression de commande dans ladite ligne hydraulique en réponse à ladite détection pour déplacer ledit piston jusqu'à ladite position de freinage de manière à immobiliser ledit véhicule sur ladite pente,
mesurer une durée pendant laquelle ledit piston reste à ladite position de freinage,
lorsque ladite durée dépasse une valeur prédéterminée, ouvrir ladite vanne pour actionner ledit dispositif de blocage du piston jusqu'à ladite position active à l'aide dudit actionneur hydraulique,
faire cesser ladite pression de commande dans ladite ligne hydraulique pendant que ledit piston reste bloqué dans ladite position de freinage par ledit dispositif de blocage du piston dans la position active. Ainsi, on réalise une fonction de freinage anti-recul (aussi connue sous le terme anglais « Hill Holder ») pour maintenir le véhicule à l'arrêt sur une pente sans action positive du conducteur et qui présente l'avantage d'être efficace pendant une longue durée, étant donné que le serrage mécanique du piston par le dispositif de blocage se substitue au serrage hydraulique au bout d'une durée déterminée. L'immobilisation du véhicule est donc réalisée de manière sûre et durable sans crainte d'une fuite de pression.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une représentation schématique fonctionnelle d'un système de freinage pour véhicule automobile avec un frein hydraulique arrière selon un premier mode de réalisation de l'invention,
- la figure 2 est une représentation fonctionnelle détaillée du circuit hydraulique du système de la figure 1,
- la figure 3 est une représentation schématique en coupe d'un frein hydraulique arrière du système de la figure 1, le frein de stationnement étant inactif,
- la figure 4 est une représentation analogue à la figure 3, le frein de stationnement étant actif,
- la figure 5 est une représentation schématique en coupe d'un frein hydraulique selon un deuxième mode de réalisation de l'invention,
- la figure 6 est une représentation schématique en coupe d'un frein hydraulique selon un troisième mode de réalisation de l'invention,
- la figure 7 représente un verrou à crémaillère selon une variante de réalisation de la zone VII de la figure 6,
- la figure 8 représente le verrou à crémaillère en coupe selon la ligne VIII-VIII de la figure 7.

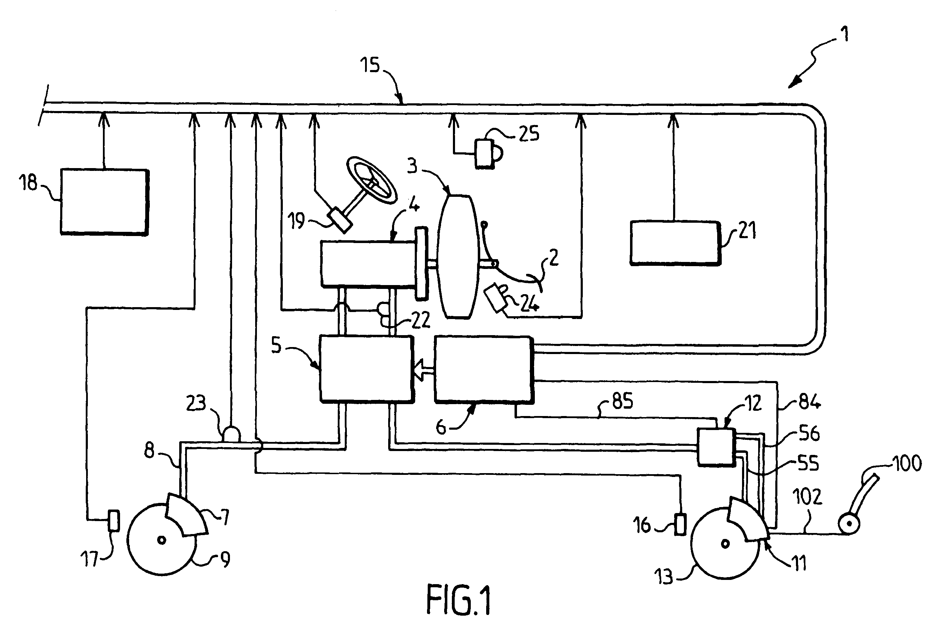

Sur la figure 1, on a représenté le système de freinage 1 d'un véhicule automobile. Une seule roue avant 9 et une seule roue arrière 13 ont été représentées par mesure de simplicité. Le système de freinage 1 comporte une pédale de frein 2 couplée de manière classique à un servomoteur 3, lui-même couplé à un maître-cylindre tandem 4. Les sorties du maître cylindre 4 sont reliées à un distributeur de pression 5 qui est commandé par un calculateur de freinage 6 à microprocesseur. Pour le freinage de la roue avant 9, un étrier de frein hydraulique avant 7, de type classique, est relié par une ligne hydraulique 8 à une sortie du distributeur de pression 5. Pour le freinage de la roue arrière 13, un étrier de frein hydraulique arrière 11, selon un premier mode de réalisation de l'invention, est relié à une sortie du distributeur de pression 5 par l'intermédiaire d'une ligne hydraulique 10 et d'un boîtier de dérivation 12 qui sera décrit plus en détail ci-dessous. Le boîtier de dérivation 12 est fixé sur un bras de suspension ou à tout autre emplacement voisin de l'étrier de frein 11.

Le calculateur de freinage 6 est programmé pour mettre en oeuvre des fonctions de freinage élaborées comme le contrôle antiblocage ABS et le contrôle de stabilité ESP. Pour cela, le calculateur de freinage 6 peut recevoir les données nécessaires par l'intermédiaire d'un bus de données 15, par exemple depuis un capteur de vitesse de roue arrière 16, un capteur de vitesse de roue avant 17, un calculateur moteur 18, un capteur d'angle de colonne de direction 19, un capteur d'accélération latérale ou de vitesse de lacet 21, un capteur de pression 22 qui mesure la pression au niveau du maître-cylindre 4, un capteur de pression 23 qui mesure la pression au niveau du frein avant 7 et un capteur 24 pour détecter l'enfoncement de la pédale de frein 2.

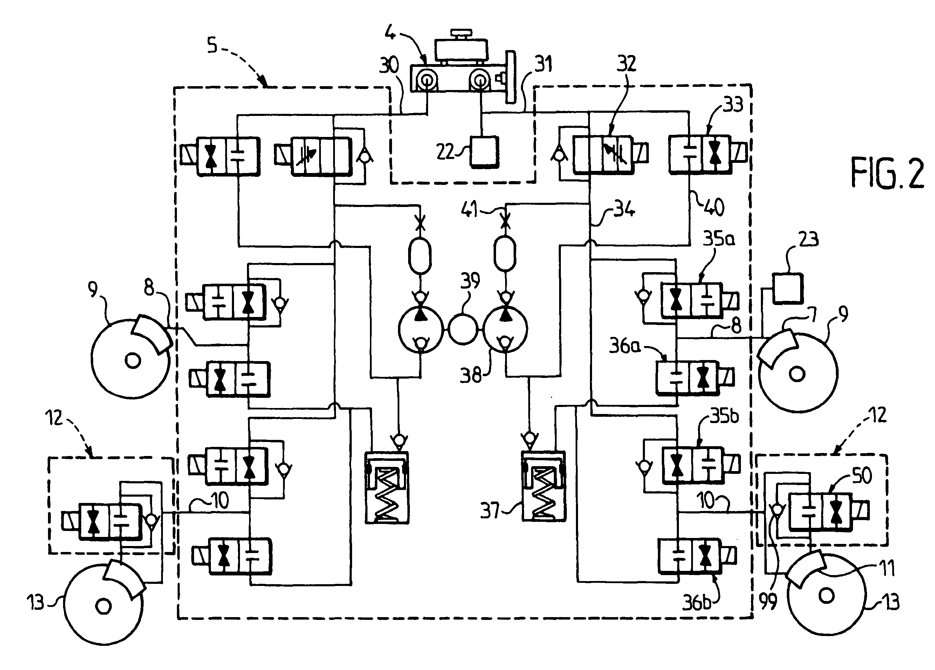

Sur la figure 2, on a représenté en détail le circuit hydraulique du système de freinage 1. La figure 2 représente en particulier l'intérieur du distributeur de pression 5 qui, étant d'une conception classique pour les systèmes ABS et ESP, sera décrit brièvement. L'étage avant du maître-cylindre 4 est relié par une ligne hydraulique 30 à une première partie du distributeur de pression 5 qui commande deux freins hydrauliques opposés diagonalement. L'étage arrière du maître-cylindre 4 est relié par une ligne hydraulique 31 à une deuxième partie du distributeur de pression qui commande également deux freins hydrauliques opposés diagonalement. Les deux moitiés du distributeur 5 étant parfaitement symétriques, seule la moitié droite sera décrite ci-dessous. La ligne hydraulique 31 alimente en parallèle une électrovanne d'isolation 32 qui est normalement passante et une électrovanne d'alimentation 33 qui est normalement non passante. A la sortie de l'électrovanne d'isolation 32, une ligne hydraulique 34 alimente en parallèle la ligne hydraulique 8 pour le frein avant 7, par l'intermédiaire d'une électrovanne d'application 35a, et la ligne hydraulique 10 pour le frein arrière, par l'intermédiaire d'une électrovanne d'application 35b. Pour le retour du fluide hydraulique, la ligne hydraulique 8 est reliée à un accumulateur de pression 37 par l'intermédiaire d'une électrovanne de relâchement 36a et la ligne hydraulique 10 par l'intermédiaire d'une électrovanne de relâchement 36b. La sortie de l'accumulateur de pression 37, munie d'un clapet anti-retour, est reliée à une pompe 38 entraînée par un moteur 39. La sortie de la pompe 38 est reliée par une ligne hydraulique 41 à la ligne hydraulique 34. Une ligne hydraulique 40 relie la sortie de l'électrovanne d'alimentation 33 à l'entrée de la pompe 38. Telle que représentée sur la figure 2, la position des différentes électrovannes correspond à un fonctionnement des freins en tant que freins de service sous la commande du maître-cylindre 4. Les électrovannes d'application 35a et 35b et les électrovannes de relâchement 36a et 36b ont un fonctionnement bien connu dans le cadre des systèmes ABS.

Le distributeur de pression 5 permet également d'envoyer une pression de commande dans les freins hydrauliques avant et arrière sans qu'une action sur la pédale de frein 2 ne soit nécessaire. Pour cela, l'électrovanne d'alimentation 33 est commutée en position passante et l'électrovanne d'isolation 32 est commutée dans sa position proportionnelle. Puis la pompe 38 est mise en marche pour créer la pression de commande nécessaire qui est acheminée à l'étrier de frein avant 7 et l'étrier de frein arrière 11, par l'intermédiaire des lignes hydrauliques 34, 8 et 10.

Sur la figure 2, le boîtier de dérivation 12 a été représenté sous la forme de son schéma hydraulique équivalent.

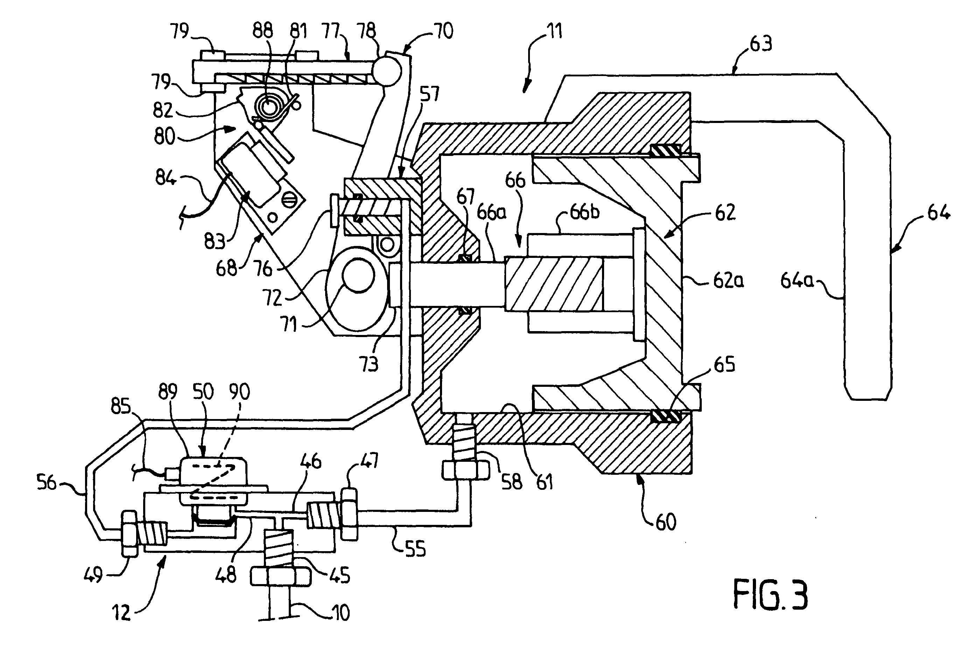

En référence à la figure 3, le boîtier de dérivation 12 et l'étrier de frein hydraulique 11 vont maintenant être décrits en détail. Le boîtier de dérivation 12 comporte un connecteur d'entrée 45 qui est relié à la ligne hydraulique 10 et un circuit hydraulique dont une première branche 46 relie le connecteur d'entrée 45 à un connecteur de sortie 47 et une deuxième branche 48 en dérivation avec la première relie le connecteur d'entrée 45 à un connecteur de sortie 49 en passant par une électrovanne 50 normalement fermée. Une ligne hydraulique 55 relie le connecteur de sortie 47 au connecteur d'entrée 58 d'un corps de cylindre 60. Une ligne hydraulique 56 relie le connecteur de sortie 49 à un vérin hydraulique 57 qui est fixé sur une aile 68 du corps de l'étrier de frein hydraulique 11 par une vis 59.

L'étrier de frein hydraulique 11 comporte un corps rigide qui est destiné à être lié, de manière classique, au châssis du véhicule avec une liberté de déplacement latérale par rapport à un disque de frein non représenté. De la gauche vers la droite sur la figure 3, ce corps rigide comporte l'aile de support 68 qui est solidaire du corps de cylindre 60, dans lequel est définie une chambre 61, et un élément supérieur 63 qui relie le corps de cylindre 60 à un élément de contrebutée 64. Un piston 62 est logé coulissant dans la chambre 61. Une bague d'étanchéité 65 assure l'étanchéité entre le piston 62 et le corps de cylindre 60. L'élément de contrebutée 64 et le piston 62 présentent deux surfaces 62a et 64a qui se font face et qui sont destinées à porter des garnitures de friction non représentées pour freiner un disque de frein non représenté.

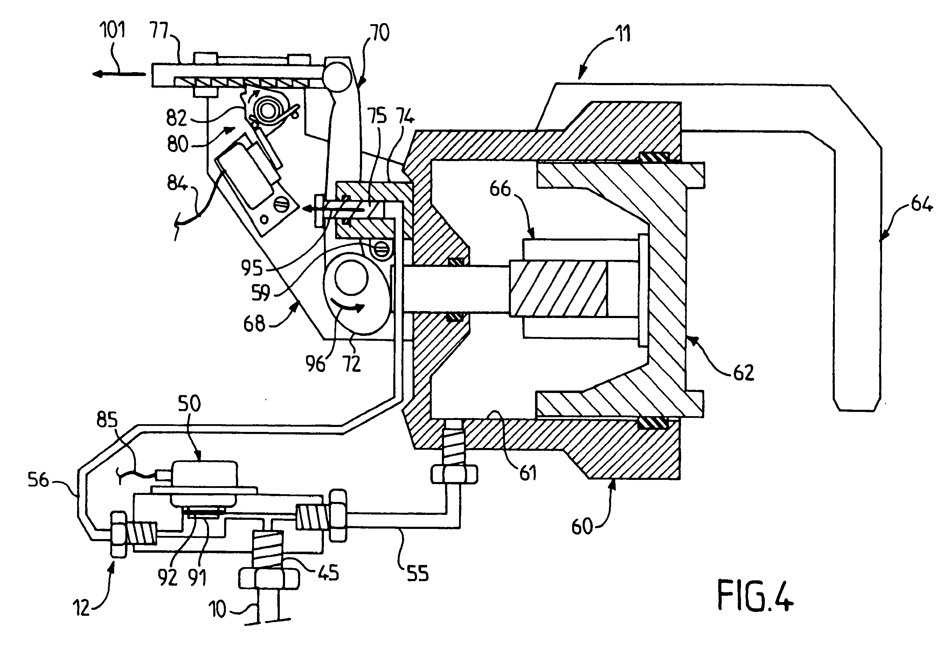

L'étrier de frein hydraulique 11 comporte aussi un dispositif de blocage du piston 62 pour servir de frein de stationnement intégré. Pour cela, un poussoir 66 est logé coulissant dans la chambre 61 et présente une extrémité libre 73 qui fait saillie hors du corps de cylindre 60. Une bague d'étanchéité 67 assure l'étanchéité entre le poussoir 66 et le corps de cylindre 60. Pour pouvoir être réglé en longueur, le poussoir 66 est avantageusement constitué d'une tige filetée 66a et d'une douille filetée complémentaire 66b qui peut prendre appui sur la face intérieure du piston 62. Dans la position représentée sur la figure 3, le dispositif de blocage est passif, c'est-à-dire que le frein de stationnement est desserré. Les mouvements du poussoir 66 sont contrôlés par un levier pivotant 70 qui est monté en rotation autour d'un axe 71 fixé à l'aile de support 68. Le levier 70 est solidaire en rotation d'une came excentrique 72 qui coopère avec l'extrémité 73 du poussoir 66. A son extrémité opposée à la came 72, le levier 70 est relié à une crémaillère 77 par l'intermédiaire d'un axe de pivotement 78. La crémaillère 77 est guidée en coulissement longitudinal par des pattes 79 liées à l'aile 68 du corps de l'étrier. Le vérin hydraulique 57 permet d'actionner le levier 70. Pour cela, le vérin 57 comporte un corps de cylindre 74 qui est lié à l'aile 68 et un piston 75 qui coulisse dans le corps de cylindre 74 et dont l'extrémité libre peut pousser une patte 76 liée rigidement au levier 70. L'électrovanne 50 qui commande sélectivement l'alimentation du vérin hydraulique 57 comporte un électro-aimant 89 alimenté par une ligne de commande 85 qui est reliée au calculateur de freinage 6, comme visible sur la figure 1. Elle comporte également un piston 91 qui porte un joint à lèvres 92 et qui est maintenu dans la position d'obturation représentée sur la figure 3 par un ressort de rappel 90. Le vérin hydraulique 57 permet de faire pivoter le levier 70 pour serrer le frein de stationnement, comme il sera expliqué plus bas. Un verrou 80 est prévu sur l'aile 68 pour pouvoir verrouiller le levier 70 en position par l'intermédiaire de la crémaillère 77. Comme visible sur la figure 3, le verrou 80 comporte un levier d'arrêt 82 qui pivote autour d'un axe 88 et qui est maintenu dans sa position de libération représentée sur la figure 3 par un ressort de rappel 81. Un électroaimant 83, commandé par une ligne de commande 84 reliée au calculateur de freinage 6, permet de faire pivoter le levier 82 dans sa position de verrouillage représentée sur la figure 4.

Lorsque le frein de stationnement n'est pas serré comme sur la figure 3, le vérin hydraulique 57 n'est pas alimenté en pression et le verrou 80 est ouvert. Le levier 70 est maintenu dans sa position représentée sur la figure 3 par un ressort de rappel non représenté. L'étrier de frein hydraulique 11 fonctionne, dans ce cas, comme frein de service de la manière habituelle, le piston 62 se déplaçant en fonction de la pression commande appliquée à travers la ligne hydraulique 10.

Le fonctionnement du dispositif de blocage va maintenant être décrit plus précisément en référence aux figures 1 et 4. La figure 4 représente le frein hydraulique arrière après serrage du frein de stationnement. Lorsque le frein de stationnement doit être serré, le calculateur de freinage 6 commande le distributeur de pression 5 pour appliquer, dans chacun des deux freins arrière, une pression de commande élevée dans la chambre 61, ce qui pousse le piston 62 dans une position de serrage appropriée. La pression de commande peut être prédéterminée ou bien calculée par le calculateur de freinage 6 en fonction de différents paramètres, comme la masse du véhicule et la pente sur laquelle se trouve le véhicule. Pour appliquer cette pression de commande, la vanne d'isolation 32 et la vanne d'alimentation 33 sont commutées comme mentionné plus haut. Chaque vanne d'application avant 35a est rendue non passante pour isoler le frein avant de la ligne hydraulique 34. Une fois le piston 62 maintenu de manière hydraulique dans la position de serrage appropriée, le calculateur 6 commande l'ouverture de l'électrovanne 50, qui est représentée en position ouverte sur la figure 4. Dans cette position, le piston 91 est rentré dans l'électroaimant 89, de sorte que le joint à lèvres 92 n'obture plus la communication entre le connecteur d'entrée 45 et le connecteur de sortie 49 du boîtier 12. Le vérin 57 reçoit donc la pression de commande depuis la ligne hydraulique 10 et à travers la ligne 56, ce qui pousse le piston 75 dans la direction indiquée par la flèche 95, de manière à faire pivoter le levier 70 dans la direction indiquée par la flèche 96. La came 72 repousse ainsi le poussoir 66 jusqu'à l'appliquer fermement contre la surface intérieure du piston 62. Lors du pivotement du levier 70, le vérin 57 doit seulement vaincre la force du ressort de rappel du levier 70 et les forces de frottement agissant sur le levier 70 et le poussoir 66. En particulier, ce n'est pas le vérin 57 qui serre le piston 62 contre le disque de frein. De ce fait, le vérin 57 est nettement plus petit que le corps de cylindre 60.

Ensuite, le calculateur 86 commande l'alimentation de l'électroaimant 83 par la ligne 84, de manière à faire pivoter le levier d'arrêt 82 dans sa position verrouillée représentée sur la figure 4. Une dent du levier d'arrêt 82 s'encliquette avec une dent de la crémaillère 77, de manière à verrouiller celle-ci en position. Ensuite la pression de commande dans la ligne 10 est supprimée en commutant les vannes d'isolation 32 et d'alimentation 33 dans leurs positions initiales représentées sur la figure 2 et l'électrovanne 50 est refermée. Le poussoir 66 reste contraint entre le piston 62 et la came 72. Ainsi, le poussoir 66 contraint le levier 70 dans la direction opposée à la flèche 96, de sorte que l'encliquetage entre le levier d'arrêt 82 et la crémaillère 77 reste fermement maintenu sans qu'il ne soit nécessaire de continuer d'alimenter l'électroaimant 83. Le frein peut ainsi rester serré sur une longue durée sans alimentation en pression hydraulique et sans alimentation électrique ni de l'électrovanne 50 ni de l'électroaimant 83.

Comme visible sur la figure 3, le joint à lèvres 92 en position fermée n'empêche pas un retour du fluide hydraulique depuis le vérin 57 vers la ligne de commande 10 après qu'on a interrompu la pression de commande dans celle-ci. L'électrovanne 50, en position fermée, agit donc comme un clapet unidirectionnel, comme le représente symboliquement le clapet 99 sur la figure 2.

Pour desserrer le frein de stationnement de manière automatique, c'est-à-dire inactiver le blocage du piston 62, une pression de commande élevée est à nouveau envoyée dans la ligne hydraulique 10 et on ouvre l'électrovanne 50, de sorte que le vérin 57 produit un léger pivotement du levier 70 dans la direction de la flèche 96, à partir de la position de la figure 4. Ce déplacement libère l'encliquetage entre le levier d'arrêt 82 et la crémaillère 77, de sorte que le levier 82 revient dans la position de libération sous l'action du ressort de rappel 81, sans que l'électroaimant 83 n'intervienne. La pression de commande est ensuite interrompue et l'électrovanne 50 est refermée. La baisse de pression dans la chambre 61 entraîne le retour du piston 62 vers sa position desserrée. La poussée du poussoir 66 contre la came 72 et l'action du ressort de rappel de levier 70, agissent conjointement pour ramener le levier 70 dans sa position inactive de la figure 3. L'étrier de frein 11 peut alors, à nouveau, fonctionner comme frein de service hydraulique.

Un levier de secours 100 est prévu pour desserrer le frein de stationnement dans le cas où une défaillance de l'électrovanne 50 ou du vérin 57 empêcherait d'actionner le vérin après que le frein de stationnement a été serré. Le levier de secours 100, qui est représenté sur la figure 1, est agencé pour permettre d'exercer sur la crémaillère 77 ou sur le levier 70 une traction dans la direction de la flèche 101 représentée sur la figure 4. Pour cela, on prévoit, par exemple, un câble 102 dont une extrémité est couplée au levier 100 et dont l'extrémité est couplée à l'axe crémaillère 77 ou au levier 70. Le levier de secours 100 peut être placé dans le coffre du véhicule ou à tout autre emplacement où il est à la fois accessible en cas de besoin, mais ne gêne pas le conducteur en temps normal.

Le frein hydraulique arrière selon le mode de réalisation décrit ci-dessus présente l'avantage de pouvoir être fabriqué en ajoutant les composants nécessaires à un étrier de frein hydraulique à frein de stationnement intégré préexistant, sans qu'il ne soit nécessaire de modifier en profondeur la conception de l'étrier.

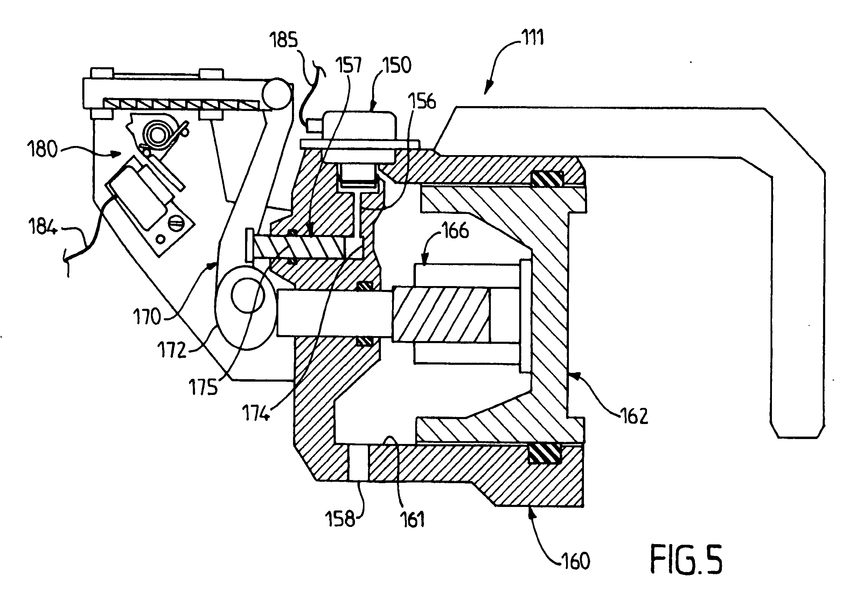

En référence à la figure 5, dans un deuxième mode de réalisation, le frein hydraulique arrière ne comporte pas de boîtier de dérivation. Sur la figure 5, les éléments analogues au premier mode de réalisation sont désignés par le même chiffre de référence augmenté de 100. Seules les différences essentielles par rapport au premier mode de réalisation sont décrites ci-dessous.

L'étrier de frein 111 présente une entrée hydraulique 158 pour la connexion de la ligne hydraulique 10. Le vérin 157 pour serrer le frein de stationnement comporte un piston 175 logé dans un alésage cylindrique 174 qui est réalisé directement dans la paroi du corps de cylindre 160. L'alimentation en fluide du vérin 157 se fait à travers un canal 156 qui est également réalisé dans la paroi du corps de cylindre 160 et qui relie la chambre 161 à l'alésage cylindrique 174 en passant par l'électrovanne 150. L'électrovanne 150 est fixée au corps de cylindre 160 pour contrôler l'écoulement dans le canal 156. Par ailleurs, le fonctionnement de ce frein est identique au premier mode de réalisation.

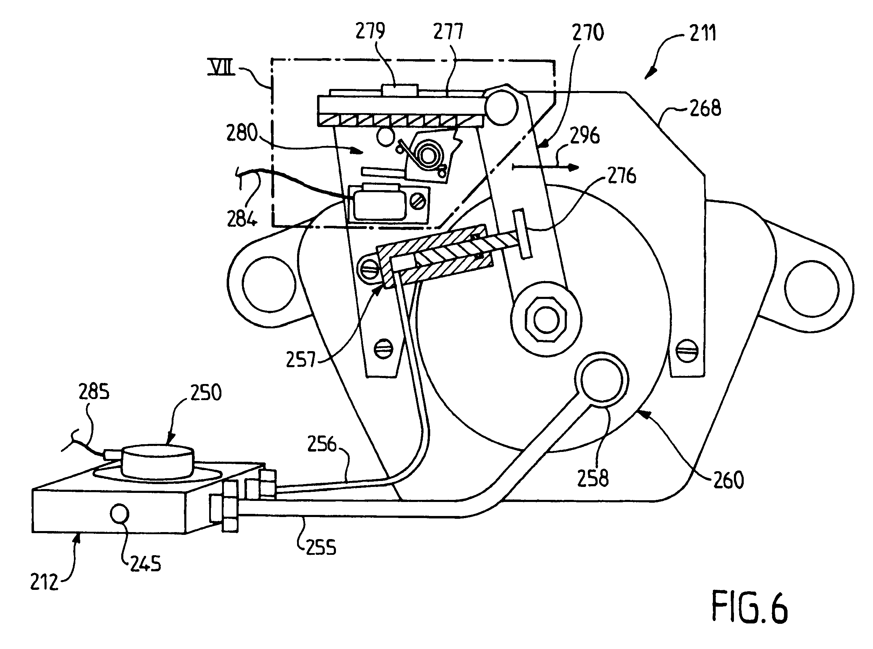

En référence à la figure 6, dans un troisième mode de réalisation, le frein hydraulique arrière comporte le boîtier de dérivation 212 et L'étrier de frein 211. Sur la figure 6, les éléments analogues au premier mode de réalisation sont désignés par le même chiffre de référence augmenté de 200. Sauf détails géométriques le boîtier 212 est identique au boîtier 12. La seule différence essentielle par rapport au frein du premier mode de réalisation réside dans le dispositif de blocage du piston. Dans le troisième mode de réalisation, l'axe de pivotement 271 du levier 270 est lié au corps de cylindre 260 et parallèle à l'axe de celui-ci. Le levier 270, la crémaillère 277 et le vérin 257 se déplacent donc dans un plan perpendiculaire par rapport aux éléments analogues du premier mode de réalisation. Au lieu d'une came et d'un poussoir, le mécanisme de transmission (non représenté) entre le levier 270 et le piston de freinage comporte une tige filetée engagée dans le corps de cylindre 260 et solidaire en rotation du levier 270 et un écrou engagé sur celle-ci. Cet écrou est immobilisé en rotation pour se translater le long de la tige filetée dans le corps de cylindre 260 en fonction de la rotation de celle-ci et s'applique fermement contre la surface arrière du piston de freinage, à la manière du poussoir 66, lorsque le levier 270 est tourné dans le sens de la flèche 296. Par ailleurs, le fonctionnement de ce frein est identique au premier mode de réalisation.

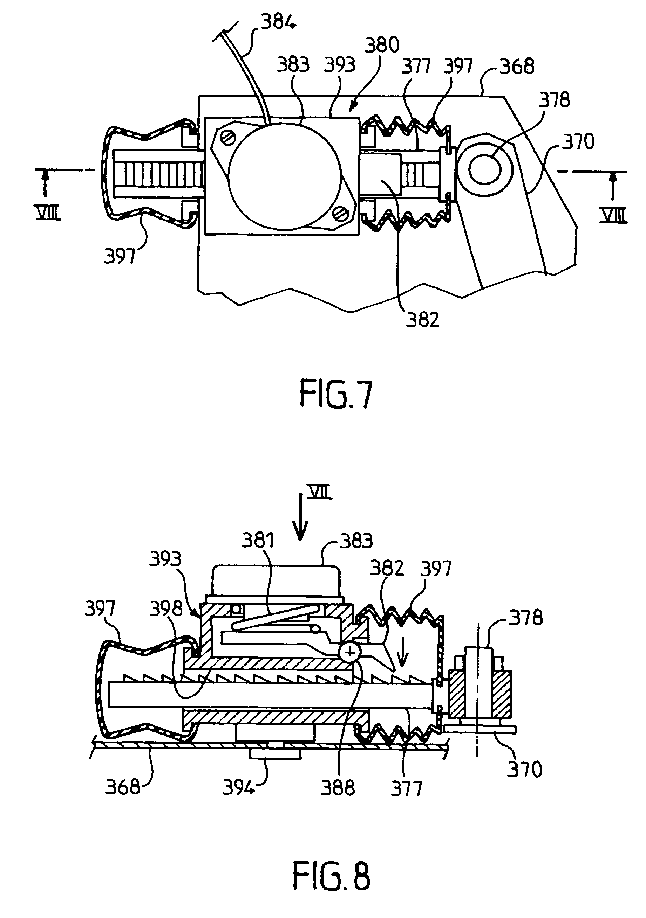

Le verrou 280 est identique au verrou 80 de la figure 3, hormis l'orientation inverse des dents d'encliquetage. A la place du verrou 280, on peut utiliser un verrou 380 qui est représenté sur les figures 7 et 8. La figure 7 représente la zone VII de la figure 6 modifiée de manière correspondante. Sur les figures 7 et 8, les éléments analogues au premier mode de réalisation sont désignés par le même chiffre de référence augmenté de 300. Le verrou 380 est représenté en position de libération sur les figures 7 et 8. Il comporte un boîtier 393 qui contient l'électroaimant 383, le levier d'arrêt 382 pivotant autour de l'axe 388 et son ressort de rappel 381. Le boîtier 393 présente un passage traversant 398 dans lequel est engagée la crémaillère 377 et comporte un élément de fixation 394 pour la fixation du verrou à l'aile 368 du corps d'étrier. Des soufflets en caoutchouc 397 sont fixés au boîtier 393 et protègent la crémaillère 377 contre la poussière. Par ailleurs, le fonctionnement du verrou 380 est identique à celui du verrou 280. Le verrou 380 peut aussi être adapté à la place des verrous 80 et 180.

Les freins arrière décrits ci-dessus fonctionnent donc comme freins de service hydrauliques et freins de stationnement à serrage et desserrage automatique. Par exemple, le verrouillage et le déverrouillage des deux freins arrière peuvent être commandé à l'aide d'un bouton de commande de frein de stationnement 25 relié au bus 15, visible sur la figure 1. Toutefois, il reste possible de coupler dispositif de blocage du piston de freinage à un levier de commande habituellement prévu dans l'habitacle du véhicule (non représenté), par exemple par l'intermédiaire d'une tringle reliée au levier 70 ou 170 ou 270. On peut ainsi cumuler une commande manuelle et une commande automatique pour le frein de stationnement.

Ces freins peuvent aussi être utilisés de manière avantageuse dans un système de freinage muni d'une fonction de maintien sur pente. La fonction de maintien sur pente est assurée par le calculateur de freinage 6 programmé en conséquence. Avec une telle fonction, lorsqu'une condition d'entrée est satisfaite, typiquement lorsqu'on détecte un arrêt du véhicule sur une surface présentant une pente supérieure à un seuil prédéterminé, les quatre freins hydrauliques sont automatiquement serrés avec une pression hydraulique suffisante pour immobiliser le véhicule, pression qui dépend notamment de la valeur de pente. Pour cela, chaque vanne d'isolation 32 et chaque vanne d'alimentation 33 du distributeur de pression 5 est commutée et la pression de commande nécessaire est engendrée par chaque pompe 38. Le niveau de pression atteint est contrôlé à l'aide du capteur 23. Grâce à une telle fonction, le recul du véhicule est empêché sans aucune action du conducteur.

Les quatre freins hydrauliques sont automatiquement relâchés dès qu'une condition de sortie est validée, typiquement lorsqu'on détecte une action du conducteur traduisant la volonté de repartir. Toutefois, si l'état d'activation automatique des freins hydrauliques se prolonge longtemps sans que la condition de sortie ne soit validée, il se présente le risque d'une perte de pression dans le circuit hydraulique ou d'une trop forte consommation d'énergie par le distributeur de pression 5.

Pour résoudre ce problème, la fonction de maintien sur pente est programmée de manière à activer automatiquement le serrage des freins de stationnement sur l'essieu arrière lorsque le serrage hydraulique des freins est maintenu depuis une durée supérieure à un seuil prédéterminé, par exemple de 40 secondes. Ainsi, dès que la fonction de maintien sur pente s'active, un chronomètre est initialisé pour mesurer le temps pendant lequel le serrage hydraulique est maintenu. Dès que ce chronomètre dépasse le seuil prescrit, une commande de serrage des freins de stationnement arrière est générée. L'activation du dispositif de blocage du piston de frein est alors réalisée automatiquement par le vérin hydraulique comme il a été décrit plus haut. La pression dans les lignes hydrauliques 8 et 10 peut ensuite être supprimée en commutant chaque vanne d'isolation 32 et chaque vanne d'alimentation 33 dans sa positon initiale représentée sur la figure 2.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, tel que définit par les revendications.

## Revendications

1. Frein hydraulique comportant un corps (60) dans lequel est formée au moins une chambre (61) reliée à une ligne hydraulique (10) pour recevoir une pression de commande et un piston (62) apte à se déplacer dans ladite chambre entre une position de repos et une position de freinage en réponse à ladite pression de commande, ledit frein hydraulique comportant un dispositif de blocage du piston (66, 70) actionnable entre une position passive dans laquelle ledit dispositif de blocage du piston (66,70) laisse ledit piston (62) se déplacer en réponse à ladite pression de commande, et une position active dans laquelle ledit dispositif de blocage du piston (66, 70) bloque ledit piston (62) dans ladite position de freinage après cessation de ladite pression de commande, ledit frein hydraulique comportant un actionneur hydraulique (57) relié à ladite ligne hydraulique (10) pour pouvoir recevoir la même pression de commande que ladite chambre (61) et apte à actionner ledit dispositif de blocage du piston (70, 66) vers ladite position active en réponse à ladite pression de commande, **caractérisé par le fait qu'**il comporte une vanne (50) apte à être sélectivement ouverte ou fermée pour transmettre ou non la pression de commande appliquée dans ladite chambre (61) audit actionneur hydraulique (57).

2. Frein hydraulique selon la revendication 1, dans lequel ledit dispositif de blocage du piston comporte un levier (70, 170, 270) actionnable par ledit actionneur hydraulique (57, 157, 257) et agencé à l'extérieur de ladite chambre et un mécanisme de transmission agencé entre ledit levier (70, 170, 270) et ledit piston (62) pour transmettre un déplacement dudit levier à un poussoir (66, 166) logé dans ledit corps (60, 160) et apte à s'appliquer fermement contre une surface intérieure dudit piston (62, 162) dans ladite position active du dispositif de blocage.

3. Frein hydraulique selon la revendication 2, dans lequel ledit mécanisme de transmission comporte une came excentrique (72, 172) solidaire en rotation dudit levier (70, 170) et coopérant avec une extrémité (73) dudit poussoir (66, 166).

4. Frein hydraulique selon la revendication 2, dans lequel ledit mécanisme de transmission comporte une tige filetée engagée dans ledit corps (260) et solidaire en rotation dudit levier (270), ledit poussoir (66, 166) comportant un écrou engagé sur ladite tige filetée et immobilisé en rotation pour se translater le long de ladite tige filetée dans ledit corps en fonction de la rotation de celle-ci.

5. Frein hydraulique selon la revendication 2, 3 ou 4, **caractérisé par le fait qu'**il comporte un verrou (80, 77) apte à verrouiller en position ledit levier (70, 170, 270) pour verrouiller ledit dispositif de blocage du piston (66, 70) dans ladite position active.

6. Frein hydraulique selon la revendication 5, **caractérisé par le fait que** ledit verrou (80, 77) occupe, par défaut, un état de libération permettant l'actionnement du dispositif d blocage du piston (66,70) entre lesdites positions passive et active, ledit verrou (80,77) étant actionnable sélectivement depuis ladite position de libération jusqu'à un état de verrouillage pour verrouiller en position ledit dispositif de blocage du piston (66, 70).

7. Frein hydraulique selon la revendication 5 **caractérisée par le fait que** ledit verrou comporte une crémaillère (77, 277) guidée en coulissement longitudinal sur un élément de support (68) solidaire dudit corps (60) de frein hydraulique et un levier d'arrêt (82) monté à pivotement par rapport audit élément de support (68), ledit levier (70, 270) d'arret étant apte à arrêter ladite crémaillère (77, 277) dans l'état de verrouillage dudit verrou et à laisser ladite crémaillère (77, 277) se déplacer dans l'état de libération dudit verrou, ladite crémaillère (77, 277) étant reliée audit levier (70, 270).

8. Frein hydraulique selon la revendication 7, **caractérisé par le fait que** ledit verrou comporte un électroaimant (83) apte à faire pivoter ledit levier d'arrêt (82) à l'encontre d'un ressort de rappel (81).

9. Frein hydraulique selon l'une des revendications 1 à 8, **caractérisé par le fait que** ladite vanne est une électrovanne (50) qui présente une position fermée par défaut.

10. Frein hydraulique selon l'une des revendications 1 à 9, **caractérisé par le fait que** ladite vanne (50) présente une position fermée dans laquelle elle permet un écoulement unidirectionnel de fluide depuis ledit actionneur hydraulique (57) vers ladite ligne hydraulique (10).

11. Frein hydraulique selon l'une des revendications 1 à 10, **caractérisé par le fait qu'**il comporte un boîtier de dérivation (12) interposé entre ladite ligne hydraulique (10) et ledit corps de frein hydraulique (60), ledit boîtier de dérivation comportant une entrée hydraulique (45) reliée à ladite ligne hydraulique (10), deux branches de circuit (46, 48) en dérivation l'une par rapport à l'autre pour relier ladite entrée hydraulique (45) a respectivement deux sorties hydrauliques (47, 49) dudit boîtier et ladite vanne (50) pour contrôler l'écoulement dans une première (48) desdites branches de circuit, ledit frein hydraulique comportant en outre deux liaisons hydrauliques (56, 55) reliant respectivement la sortie de la première branche audit actionneur hydraulique (57) et la sortie de l'autre branche à ladite chambre (61).

12. Frein hydraulique selon l'une des revendications 1 à 10, **caractérisé par le fait que** ledit corps de frein hydraulique (160) comporte une liaison hydraulique (156) reliant ladite chambre (161) audit actionneur hydraulique (157) et ladite vanne (150) agencée pour contrôler l'écoulement dans ladite liaison hydraulique (156).

13. Frein hydraulique selon l'une des revendications 1 à 12, **caractérisé par le fait que** ladite ligne hydraulique (10) est reliée à un distributeur de pression (5) muni d'une pompe (38) apte à engendrer ladite pression de commande.

14. Utilisation d'un frein hydraulique (11, 12 ; 111 ; 211, 212) selon l'une des revendications 1 à 13 comme frein de stationnement d'un véhicule automobile, **caractérisée par** les étapes consistant à :
produire un signal de commande de frein de stationnement,
envoyer une pression de commande dans ladite ligne hydraulique (10) en réponse audit signal de commande de frein de stationnement pour déplacer ledit piston (62, 162) jusqu'à ladite position de freinage,
ouvrir ladite vanne (50, 150, 250) pour actionner ledit dispositif de blocage du piston (70, 66 ; 170, 166 ; 270) jusqu'à ladite position active à l'aide dudit actionneur hydraulique (57, 157, 257),
faire cesser ladite pression de commande dans ladite ligne hydraulique (10) pendant que ledit piston (62, 162) reste bloqué dans ladite position de freinage par ledit dispositif de blocage (70, 66; 170, 166; 270) du piston dans la position active.

15. Utilisation d'un frein hydraulique selon l'une des revendications 1 à 13 pour maintenir automatiquement un véhicule automobile sur une pente, **caractérisée par** les étapes consistant à :
détecter un état d'arrêt dudit véhicule automobile sur une pente,
envoyer une pression de commande dans ladite ligne hydraulique (10) en réponse à ladite détection pour déplacer ledit piston (62, 162) jusqu'à ladite position de freinage de manière à immobiliser ledit véhicule sur ladite pente,
mesurer une durée pendant laquelle ledit piston (62,162) reste à ladite position de freinage,
lorsque ladite durée dépasse une valeur prédéterminée, ouvrir ladite vanne (50, 150, 250) pour actionner ledit dispositif de blocage du piston (70, 66 ; 170, 166 ; 270) jusqu'à ladite position active à l'aide dudit actionneur hydraulique (57, 157, 257),
faire cesser ladite pression de commande dans ladite ligne hydraulique (10) pendant que ledit piston (62) reste bloqué dans ladite position de freinage par ledit dispositif de blocage du piston (70,66;170,166;270) dans la position active.

## Claims

1. Hydraulic brake including a body (60) in which at least one chamber (61) is formed and connected to a hydraulic line (10) to receive a control pressure and a piston (62) capable of moving in said chamber between a resting position and a braking position in response to said control pressure, said hydraulic brake including a piston locking device (66, 70) which can be actuated between a passive position in which said piston locking device (66, 70) allows said piston (62) to move in response to said control pressure, and an active position in which said piston locking device (66, 70) locks said piston (62) in said braking position after cessation of said control pressure, said hydraulic brake including a hydraulic actuator (57) connected to said hydraulic line (10) in order to be able to receive the same control pressure as said chamber (61) and capable of actuating said piston locking device (70, 66) towards said active position in response to said control pressure, **characterised in that** it includes a valve (50) capable of being selectively open and closed to transmit or otherwise the control pressure applied in said chamber (61) to said hydraulic actuator (57).

2. Hydraulic brake according to claim 1, in which said piston locking device includes a lever (70, 170, 270) which can be actuated by said hydraulic actuator (57, 157, 257) and fitted outside said chamber and a transmission mechanism fitted between said lever (70, 170, 270) and said piston (62) to transmit a movement of said lever to a push-rod (66, 166) housed in said body (60, 160) and capable of being applied firmly against an internal surface of said piston (62, 162) in said active position of the locking device.

3. Hydraulic brake according to claim 2, in which said transmission mechanism includes an eccentric cam (72, 172) rotating with said lever (70, 170) and cooperating with an end (73) of said push-rod (66, 166).

4. Hydraulic brake according to claim 2, in which said transmission mechanism includes a threaded rod engaged in said body (260) and rotating with said lever (270), said push-rod (66, 166) including a nut engaged on said threaded rod and immobilised in rotation in order to traverse along said threaded rod into said body as a function of the rotation of the latter.

5. Hydraulic brake according to claim 2, 3 or 4, **characterised in that** it includes a latch (80, 77) capable of locking said lever (70, 170, 270) in position in order to lock said piston locking device (66, 70) in said active position.

6. Hydraulic brake according to claim 5, **characterised in that** said latch (80, 77) occupies, by default, a release state allowing the piston locking device (66, 70) to be actuated between said passive and active positions, said latch (80, 77) being able to be actuated selectively from said release position to a locking state in order to lock said piston locking device (66, 70) in position.

7. Hydraulic brake according to claim 5, **characterised in that** said latch includes a rack (77, 277) guided by sliding longitudinally on a support element (68) integrated with said hydraulic brake body (60) and a stop lever (82) mounted so as to pivot with respect to said support element, said lever (70, 270) being capable of stopping said rack (77, 277) in the locking state of said latch and allowing said rack to move in the release state of said latch, said rack (77, 277) being connected to said lever (70, 270).

8. Hydraulic brake according to claim 7, **characterised in that** said latch includes an electromagnet (83) capable of making said stop lever (82) pivot against a return spring (81).

9. Hydraulic brake according to one of claims 1 to 8, **characterised in that** said valve is a solenoid valve (50) which presents a closed position by default.

10. Hydraulic brake according to one of claims 1 to 9, **characterised in that** said valve (50) presents a closed position in which it allows for unidirectional flow of fluid from said hydraulic actuator (57) towards said hydraulic line (10).

11. Hydraulic brake according to one of claims 1 to 10, **characterised in that** it includes a branching unit (12) interposed between said hydraulic line (10) and said hydraulic brake body (60), said branching unit including a hydraulic input (45) connected to said hydraulic line (10), two circuit branches (46, 48) branched with respect to one another in order to connect said hydraulic input (45) to respectively two hydraulic outputs (47, 49) from said unit and said valve (50) in order to control the flow into a first (48) of said circuit branches, said hydraulic brake also including two hydraulic connections (56, 55) connecting respectively the output from the first branch to said hydraulic actuator (57) and the output from the other branch to said chamber (61).

12. Hydraulic brake according to one of claims 1 to 10, **characterised in that** said hydraulic brake body (160) includes a hydraulic connection (156) connecting said chamber (161) to said hydraulic actuator (157) and said valve (150) fitted to control the flow into said hydraulic connection (156).

13. Hydraulic brake according to one of claims 1 to 12, **characterised in that** said hydraulic line (10) is connected to a pressure distributor (5) fitted with a pump (38) capable of producing said control pressure.

14. Use of a hydraulic brake (11, 12; 111; 211, 212) according to one of claims 1 to 13 as a parking brake for an automobile, **characterised by** stages consisting in:
producing a parking brake control signal,
sending a control pressure into said hydraulic line (10) in response to said parking brake control signal in order to move said piston (62, 162) to said braking position,
opening said valve (50, 150, 250) in order to actuate said piston locking device (70, 66; 170, 166; 270) to said active position by means of said hydraulic actuator (57, 157, 257), terminate said control pressure in said hydraulic line while said piston (62, 162) remains locked in said braking position by said piston locking device (70, 66; 170, 166; 270) in active position.

15. Use of a hydraulic brake according to one of claims 1 to 13 automatically to hold an automobile on a slope, **characterised by** stages consisting in:
detecting a stop state of said automobile on a slope,
sending a control pressure into said hydraulic line (10) in response to said detection in order to move said piston (62, 162) to said braking position so as to immobilise said vehicle on said slope,
measuring a period during which said piston remains in said braking position,
when said period exceeds a predetermined value, opening said valve (50, 150, 250) in order to actuate said piston locking device (70, 66; 170, 166; 270) to said active position by means of said hydraulic actuator (57, 157, 257),
terminate said control pressure in said hydraulic line (10) while said piston remains locked in said braking position by said piston locking device (70, 66; 170, 166; 270) in active position.

## Patentansprüche

1. Hydraulische Bremse, die einen Körper (60), in dem zumindest eine Kammer (61) gebildet ist, die an einer hydraulischen Leitung (10) angeschlossen ist, um einen Steuerdruck zu empfangen, und einen Kolben (62) aufweist, der geeignet ist, sich in der Kammer zwischen einer Ruheposition und einer Bremsposition in Antwort auf den Steuerdruck zu bewegen, wobei die hydraulische Bremse eine Kolbenblockierungsvorrichtung (66, 70) aufweist, die zwischen einer passiven Position, in der die Kolbenblockierungsvorrichtung (66, 70) den Kolben (62) sich in Antwort auf den Steuerdruck bewegen lässt, und einer aktiven Position, in der die Kolbenblockierungsvorrichtung (66, 70) den Kolben (62) in der Bremsposition nach Einstellung des Steuerdrucks blockiert, betätigbar ist, wobei die hydraulische Bremse ein hydraulisches Stellglied (57) aufweist, das an der hydraulischen Leitung (10) angeschlossen ist, um denselben Steuerdruck zu empfangen wie die Kammer (61) und das geeignet ist, die Kolbenblockierungsvorrichtung (70, 66) in Richtung der aktiven Position in Antwort auf den Steuerdruck zu betätigen, **gekennzeichnet durch** die Tatsache, dass sie ein Ventil (50) aufweist, das selektiv geöffnet oder geschlossen werden kann, um den Steuerdruck, der in der Kammer (61) angewandt wird, an das hydraulische Stellglied (57) zu übertragen oder nicht zu übertragen.

2. Hydraulische Bremse gemäß Anspruch 1, in der die Kolbenblockierungsvorrichtung einen Hebel (70, 170, 270), der durch das hydraulische Stellglied (57, 157, 257) betätigbar ist und außerhalb der Kammer angeordnet ist, und einen Übertragungsmechanismus aufweist, der zwischen dem Hebel (70, 170, 270) und dem Kolben (62) angeordnet ist, um eine Bewegung des Hebels an einen Schieber (66, 166) zu übertragen, der in dem Körper (60, 160) untergebracht ist und geeignet ist, sich fest gegen einer innere Oberfläche des Kolbens (62, 162) in der aktiven Position der Blockierungsvorrichtung zu legen.

3. Hydraulische Bremse gemäß Anspruch 1, in der der Übertragungsmechanismus einen exzentrischen Nocken (72, 172) drehfest zu dem Hebel (70, 170) und zusammenwirkend mit einem Endstück des Schiebers (66, 166) aufweist.

4. Hydraulische Bremse gemäß Anspruch 2, in der der Übertragungsmechanismus eine Gewindestange aufweist, die in den Körper (260) eingeführt und drehfest zu dem Hebel (270) ist, wobei der Schieber (66, 166) eine Mutter aufweist, die auf die Gewindestange eingeführt und rotationsfeststehend ist, um sich entlang der Gewindestange in den Körper entsprechend der Rotation von dieser zu verschieben.

5. Hydraulische Bremse gemäß Anspruch 2, 3, oder 4, **gekennzeichnet durch** die Tatsache, dass sie eine Verriegelung (80, 77) aufweist, die geeignet ist, den Hebel (70, 170, 270) in Position zu verriegeln, um die Kolbenblockierungsvorrichtung (66, 70) in der aktiven Position zu verriegeln.

6. Hydraulische Bremse gemäß Anspruch 5, **gekennzeichnet durch** die Tatsache, dass die Verriegelung (80, 77), standardmäßig, einen Freigabezustand einnimmt, der die Betätigung der Kolbenblockierungsvorrichtung (66, 70) zwischen der passiven und der aktiven Position erlaubt, wobei die Verriegelung (80, 77) selektiv von der Freigabeposition bis zu einem Verriegelungszustand betätigbar ist, um die Kolbenblockierungsvorrichtung (66, 70) in Position zu verriegeln.

7. Hydraulische Bremse gemäß Anspruch 5, **gekennzeichnet durch** die Tatsache, dass die Verriegelung eine Zahnstange (77, 277), die verschiebbar longitudinal auf einem Trägerelement (68) fest zu dem Körper (60) der hydraulischen Bremse geführt ist, und einen Sperrhebel (82) aufweist, der schwenkbar gegenüber dem Trägerelement (68) montiert ist, wobei der Sperrhebel (70, 270) geeignet ist, die Zahnstange (77, 277) in einem Verriegelungszustand der Verriegelung zu arretieren und die Zahnstange (77, 277) in einem Freigabezustand der Verriegelung sich verschieben lassen, wobei die Zahnstange (77, 277) mit dem Hebel (70, 270) verbunden ist.

8. Hydraulische Bremse gemäß Anspruch 7, **gekennzeichnet durch** die Tatsache, dass die Verriegelung einen Elektromagneten (83) aufweist, der geeignet ist, den Sperrhebel (82) gegenüber einer Rückstellfeder (81) zum Schwenken zu bringen.

9. Hydraulische Bremse gemäß einem der Ansprüche 1 bis 8, **gekennzeichnet durch** die Tatsache, dass das Ventil ein Magnetventil (50) ist, das standardmäßig eine geschlossene Position aufweist.

10. Hydraulische Bremse gemäß einem der Ansprüche 1 bis 8, **gekennzeichnet durch** die Tatsache, dass das Ventil (50) eine geschlossene Position aufweist, in der es einen unidirektionalen Durchfluss von Fluid von dem hydraulischen Stellglied (57) in Richtung des der hydraulischen Leitung (10).

11. Hydraulische Bremse gemäß einem der Ansprüche 1 bis 10, **gekennzeichnet durch** die Tatsache, dass sie ein Nebenschlussgehäuse (12) aufweist, das zwischen der hydraulischen Leitung (10) und dem Körper der hydraulischen Bremse (60) geschaltet ist, wobei das Nebenschlussgehäuse einen hydraulischen Eingang (45), der mit der hydraulischen Leitung (10) verbunden ist, zwei Schaltungspfade (46, 48), der eine im Nebenschluss gegenüber dem anderen, um den hydraulischen Eingang (45) mit jeweils zwei hydraulischen Ausgängen (47, 49) des Gehäuses zu verbinden und das Ventil (50), um den Abfluss in einen ersten (48) der Schaltungspfade zu steuern, wobei die hydraulische Bremse des Weiteren zwei hydraulische Verbindungen (56, 55) aufweist, die jeweils den Ausgang des ersten Zweiges mit dem hydraulischen Stellglied (57) und den Ausgang des anderen Zweiges mit der Kammer (61) verbinden.

12. Hydraulische Bremse gemäß einem der Ansprüche 1 bis 10, **gekennzeichnet durch** die Tatsache, dass der Körper der hydraulischen Bremse (160) eine hydraulische Verbindung (156), die die Kammer (161) mit dem hydraulischen Stellglied (157) verbindet, und das Ventil (150) aufweist, das eingerichtet ist, um den Abfluss in die hydraulische Verbindung (156) zu steuern.

13. Hydraulische Bremse gemäß einem der Ansprüche 1 bis 12, **gekennzeichnet durch** die Tatsache, dass die hydraulische Leitung (10) mit einem Druckverteiler (5) verbunden ist, der mit einer Pumpe (38) ausgestattet ist, die geeignet ist, den Steuerdruck zu erzeugen.

14. Verwendung einer hydraulischen Bremse (11, 12; 111; 211, 212) gemäß einem der Ansprüche 1 bis 13 als eine Feststellbremse eines Kraftfahrzeugs, **gekennzeichnet durch** die Schritte, die bestehen aus:
Erzeugen eines Feststellbremsensteuersignals,
Senden eines Steuerdrucks in die hydraulische Leitung (10) in Antwort auf das Feststellbremsensteuersignals, um den Kolben (62, 162) bis zu der Bremsposition zu verschieben,
Öffnen des Ventils (50, 150, 250), um die Kolbenblockierungsvorrichtung (70, 66; 170, 166; 270) bis zu der aktiven Position mit Hilfe des hydraulischen Stellglieds (57, 157, 257) zu betätigen,
Beenden des Steuerdrucks in der hydraulischen Leitung (10), während der Kolben (62, 162) in der Bremsposition **durch** die Kolbenblockierungsvorrichtung (70, 66; 170, 166, 270) in der aktiven Position blockiert bleibt.

15. Verwendung einer hydraulischen Bremse gemäß einem der Ansprüche 1 bis 13, um ein Kraftfahrzeug automatisch auf einem Gefälle zu halten, **gekennzeichnet durch** die Schritte, die bestehen aus:
Erkennen eines Haltezustands des Kraftfahrzeugs auf einem Gefälle,
Senden eines Steuerdrucks in die hydraulische Leitung (10) in Antwort auf die Erkennung, um den Kolben (62, 162) bis zu der Bremsposition zu verschieben, um das Fahrzeug auf dem Gefälle zum Stehen zu bringen,
Messen einer Dauer, während der der Kolben (62, 162) in der Bremsposition bleibt,
wenn die Dauer einen vorbestimmten Wert übersteigt, Öffnen des Ventils (50, 150, 250), um die Kolbenblockierungsvorrichtung (70, 66; 170, 166; 270) bis zu der aktiven Position mit Hilfe des hydraulischen Stellglieds (57, 157, 257) zu betätigen,
Beenden des Steuerdrucks in der hydraulischen Leitung (10), während der Kolben (62, 162) in der Bremsposition **durch** die Kolbenblockierungsvorrichtung (70, 66; 170, 166, 270) in der aktiven Position blockiert bleibt.
